# EUROPÄISCHE PATENTANMELDUNG

(11) **EP 2 389 802 A1**
(43) Veröffentlichungstag der Anmeldung: **30.11.2011**
(21) Anmeldenummer: 11002669.7
(22) Anmeldetag: 31.03.2011
(51) Int. Cl.: A01K 49/00, A01K 47/06

(54) **Ablegerkasten**

(30) Priorität: 25.05.2010 DE 202010007115 U
(71) Anmelder: Stehr GmbH, 24223 Schwentinental (DE)
(72) Erfinder: Wagner, Roland, 24223 Schwentinental (DE)
(74) Vertreter: Tönnies, Jan G.

(57) **Zusammenfassung**

Ablegerkasten (10), mit einem aus einem Boden (20) und einer Mehrzahl von sich senkrecht vom Boden (20) erstreckenden Wänden (30) gebildeten Kasten und einem in einem bodennahen Abschnitt einer Wand (30) angeordneten Flugloch (40),
wobei das Flugloch (40) durch eine in einem Teilbereich des Bodens (20) und einer Wand (30) gebildete L-förmige, einen Freiraum (40) zwischen Boden (20) und Wand (30) eröffnende Ausnehmung gebildet ist, und
ein mit dem Ablegerkasten (10) lösbar zu verbindendes, zwei L-förmig miteinander verbundene Schenkel (50a, 50b) aufweisendes Element (50) vorgesehen ist,
wobei das Element (50) das Flugloch (40) zum Transport des Ablegerkastens (10) in einer ersten Position die Ausnehmung mit beiden Schenkeln (50a, 50b) einnehmend verschließt und das Flugloch (40) in einer zweiten Position, in der ein Schenkel (50a) von der Ausnehmung aufgenommen und der andere Schenkel (50b) sich unter Bildung eines vor dem Flugloch (40) angeordneten Flugbretts (50b) vom Ablegerkasten erstreckt, freigibt.

## Beschreibung

Die Erfindung betrifft einen Ablegerkasten, mit einem aus einem Boden und einer Mehrzahl von sich senkrecht vom Boden erstreckenden Wänden gebildeten Kasten und einem in einem bodennahen Abschnitt einer Wand angeordneten Flugloch.

Ablegerkästen sind spezielle Bienenbeuten, die für die Vermehrung von Bienenvölkern verwendet werden. Insbesondere müssen die Ablegerkästen gut transportabel sein, da die Ablegerkästen, um eine Rückkehr der einzelnen Individuen zu ihrem Stammvolk bzw. ihren Stammvölkern zu verhindern, zur erfolgreichen Etablierung neuer Völker zu einem vom Standort des Altvolks entfernten Ablegerstandort verbracht werden müssen.

Allerdings hat es sich bei den bekannten Ablegerkästen beim Transport als problematisch erwiesen, dass das Flugloch sicher verschlossen werden muss und sich während des Transports nicht öffnen darf. Darüber hinaus ist auch das üblicherweise vor dem Flugloch angeordnete Flugbrett beim Transport für Beschädigungen besonders anfällig.

Aufgabe der Erfindung ist es daher, eine Bienenbeute, insbesondere einen Ablegerkasten, zu schaffen, die während des Transports sicher verschlossen werden kann und dessen Flugbrett beim Transport gegen Beschädigungen weniger anfällig ist.

Die Aufgabe wird durch den Ablegerkasten mit den Merkmalen von Anspruch 1 gelöst. Die Unteransprüche geben vorteilhafte Ausgestaltungen der Erfindung wieder.

Grundgedanke der Erfindung ist es, den Ablegerkasten mit einer bodenseitigen L-förmigen das Flugloch bildenden Ausnehmung auszugestalten, die durch Anordnung eines L-förmigen Profilelements in einer ersten Position vollständig verschlossen wird, wobei das L-förmige Profil zur L-förmigen Ausnehmung annähernd komplementär ausgebildet ist und mit dieser in der ersten Position bevorzugt bündig abschließt. In einer zweiten Position, die bevorzugt durch Drehen des L-förmigen Elements um zwei Achsen erreicht wird, wird ein Schenkel des Elements in der Ausnehmung fixiert, wobei sich der andere Schenkel des Elements vom Ablegerkasten erstreckt und vor dem vom Element freigegebenen Flugloch ein Flugbrett ausbildet.

Die Erfindung wird anhand eines in den Zeichnungen dargestellten, besonders bevorzugt ausgestalteten Ausführungsbeispiels näher erläutert. Es zeigen:
- Fig. 1: eine teilweise geschnittene, perspektivische Ansicht des Ablegerkastens nach der Erfindung mit geschlossenem Flugloch;
- Fig. 2: eine teilweise geschnittene, perspektivische Ansicht des Ablegerkastens nach der Erfindung mit geöffnetem Flugloch; und
- Fig. 3: eine perspektivische Ansicht des Ablegerkastens nach der Erfindung bei geöffnetem Flugloch von unten.

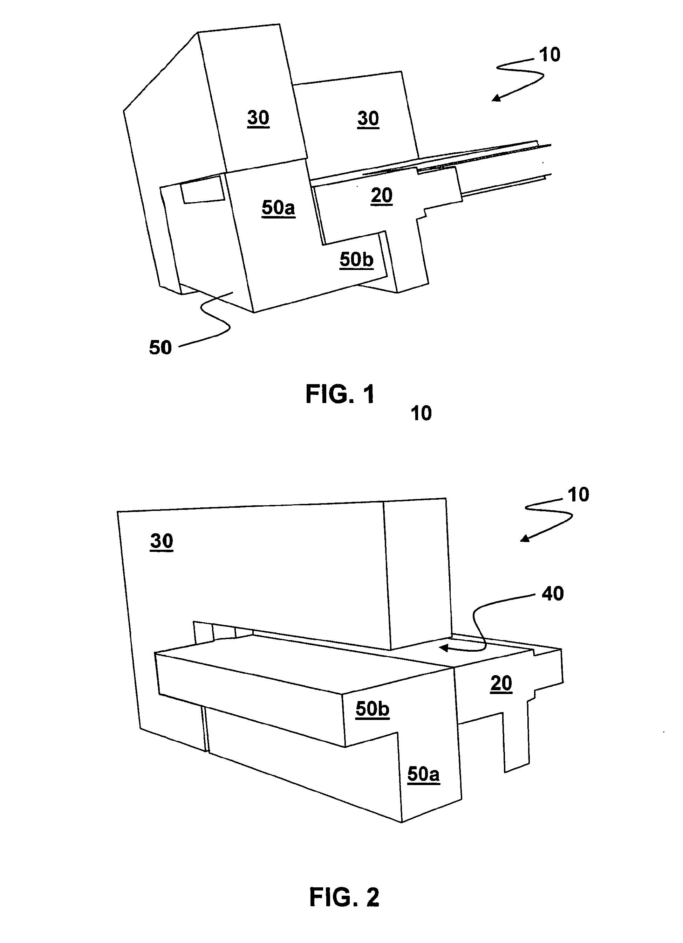

Fig. 1 zeigt eine schematische und teilweise geschnittene, perspektivische Ansicht eines besonders bevorzugt ausgestalteten Ablegerkastens nach der Erfindung. Der Ablegerkasten 10 besteht aus einem bevorzugt aus Polystyrolschaumstoff hergestellten Kasten mit einem Boden 20 und einer Mehrzahl von sich senkrecht vom Boden 20 erstreckenden Wänden 30. Bevorzugt weist der Ablegerkasten 10 auch einen (nicht dargestellten), den Kasten verschließenden Deckel auf.

In einem Teilbereich des Bodens 20 und einem daran angrenzenden Teilbereich einer Wand 30 ist erfindungsgemäß eine L-förmige Ausnehmung vorgesehen, die in Fig. 1 vollständig vom Element 50 eingenommen ist. Das Element 50 besteht aus zwei im Wesentlichen rechtwinklig miteinander verbundenen Schenkeln 50a, 50b, wobei in wenigstens einem Schenkel, wie in Fig. 1 angedeutet, eine Griffmulde vorgesehen ist, die das Entnehmen des L-förmigen Profilelements 50 aus der Ausnehmung und damit das Öffnen des Fluglochs des Ablegerkastens 10 erleichtern soll.

Wird das L-förmige Element 50 durch Herausnehmen des Elements 50 nach unten aus der Ausnehmung des Ablegerkastens genommen, wird das in Fig. 2 gezeigte Flugloch 40 freigegeben. Das L-förmige Element 50 wird darauf bevorzugt derart gedreht, dass der vormals vertikal ausgerichtete eine Schenkel 50a, allerdings diesmal mit seinem freien Ende voran, vertikal in die Ausnehmung eingesetzt wird, wobei sich der andere Schenkel 50b vom Ablegerkasten 10 erstreckt und vor dem vom L-förmigen Element 50 freigegebenen Flugloch 40 ein Flugbrett 50b bildet.

Vorteilhaft ist es, wenn der sich der jeweils vertikal erstreckende, quer zum Flugbrett 50b ausbildenden Schenkel 50b angeordnete Schenkel 50a eine Feder und die Ausnehmung eine komplementär zur Feder eingerichtete Nut aufweist, da das L-förmige Element 50 so leicht positioniert und fixiert werden kann.

Das Flugloch 40 kann als sich parallel zum Boden 20 erstreckender länglicher Schlitz ausgebildet sein, der sich bevorzugt über die gesamte Länge der Ausnehmung bzw. des L-förmigen Elements 50 erstreckt. Das L-förmige Element 50 kann aber auch so ausgebildet sein, dass die Öffnung in der Ausnehmung durch das L-förmige Element 50 begrenzt wird und so ein kleineres Flugloch 40 erhalten wird.

Darüber hinaus können in der Ausnehmung und/oder am L-förmigen Element 50 die Einschubtiefe des L-förmigen Elements 50 in die Ausnehmung begrenzende Begrenzungselemente vorgesehen sein, wobei das Element 50 in der den Ablegerkasten 10 verschließenden ersten Position bevorzugt vollständig in die Ausnehmung eingesetzt werden kann und in der zweiten Position, in der das Flugloch 40 freigegeben wird, nur soweit in die Ausnehmung eingesetzt werden kann, dass das Flugloch 40 ungehindert freigegeben wird und das Flugbrett 50b bzw. der Schenkel 50b vor dem Flugloch 40 bevorzugt mit dem Boden 20 des Ablegerkastens 10 fluchtend positioniert wird.

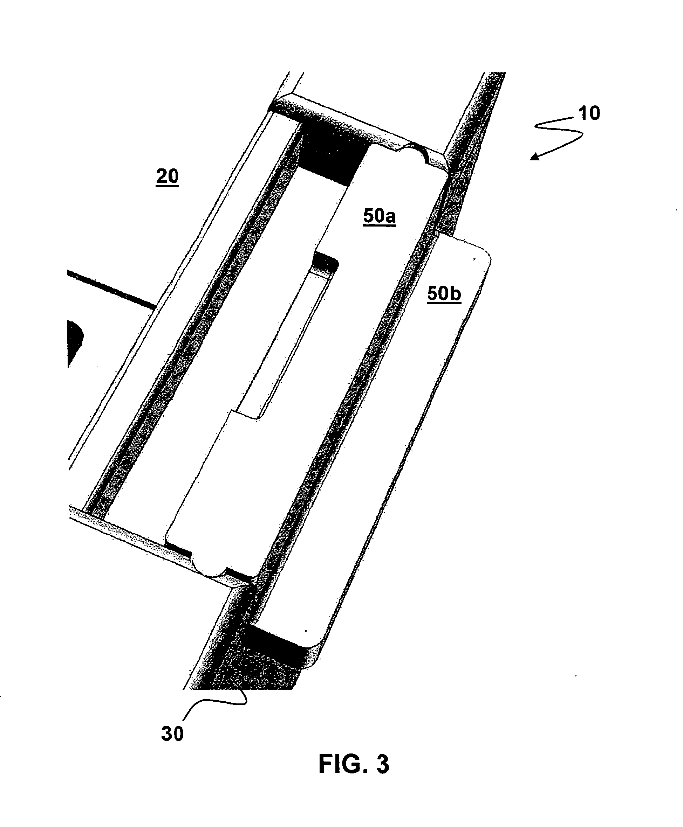

Fig. 3 zeigt schließlich den Ablegerkasten 10 der Erfindung mit geöffnetem Flugloch 40 von unten, wobei die Ausbildung von Nut und Feder an L-förmigem Element 50 und Ausnehmung bzw. Wand 30 gut zu erkennen ist.

## Patentansprüche

1. Ablegerkasten (10), mit einem aus einem Boden (20) und einer Mehrzahl von sich senkrecht vom Boden (20) erstreckenden Wänden (30) gebildeten Kasten und einem in einem bodennahen Abschnitt einer Wand (30) angeordneten Flugloch (40),
**dadurch gekennzeichnet, dass**
das Flugloch (40) durch eine in einem Teilbereich des Bodens (20) und einer Wand (30) gebildete L-förmige, einen Freiraum (40) zwischen Boden (20) und Wand (30) eröffnende Ausnehmung gebildet ist, und
ein mit dem Ablegerkasten (10) lösbar zu verbindendes, zwei L-förmig miteinander verbundene Schenkel (50a, 50b) aufweisendes Element (50) vorgesehen ist,
wobei das Element (50) das Flugloch (40) zum Transport des Ablegerkastens (10) in einer ersten Position die Ausnehmung mit beiden Schenkeln (50a, 50b) einnehmend verschließt und das Flugloch (40) in einer zweiten Position, in der ein Schenkel (50a) von der Ausnehmung aufgenommen und der andere Schenkel (50b) sich unter Bildung eines vor dem Flugloch (40) angeordneten Flugbretts (50b) vom Ablegerkasten erstreckt, freigibt.

2. Ablegerkasten (10) nach Anspruch 1, **dadurch gekennzeichnet, dass** das L-förmige Element (50) in der ersten Position mit der Außenfläche des Bodens (20) und/oder der Wand (30) fluchtet.

3. Ablegerkasten (10) nach einem der vorhergehenden Ansprüche, **dadurch gekennzeichnet, dass** der das das Flugbrett (50b) ausbildende Schenkel (50b) in der zweiten Position mit dem Boden (20) fluchtet.

4. Ablegerkasten (10) nach einem der vorhergehenden Ansprüche, **gekennzeichnet durch** eine sich in der Ausnehmung entlang der Wand (30) erstreckende Nut und eine entlang des quer zu dem den Flugbrett (50b) bildenden Schenkel (50b) verlaufenden Schenkels (50a) erstreckende Feder.

5. Ablegerkasten (10) nach einem der vorhergehenden Ansprüche, **gekennzeichnet durch** eine in wenigstens einem Schenkel (50a, 50b) angeordnete Griffmulde.

6. Ablegerkasten (10) nach einem der vorhergehenden Ansprüche, **dadurch gekennzeichnet, dass** das Flugloch (40) als sich parallel zum Boden (20) erstreckender, länglicher Schlitz ausgebildet ist.

7. Ablegerkasten (10) nach einem der vorhergehenden Ansprüche, **gekennzeichnet durch** einen den Ablegerkasten (10) verschließenden Deckel.

8. Ablegerkasten (10) nach einem der vorhergehenden Ansprüche, **dadurch gekennzeichnet, dass** der Ablegerkasten (10) aus Polystyrolschaumstoff gefertigt ist.
